# EUROPEAN PATENT APPLICATION

(11) **EP 1 335 572 A2**
(43) Date of publication of application: **13.08.2003**
(21) Application number: 03002277.6
(22) Date of filing: 01.02.2003
(51) Int. Cl.: H04M 3/51, H04L 12/56

(54) **Dynamically updated qos parameterization according to expected business revenue**

(30) Priority: 08.02.2002 US 71465
(71) Applicant: Genesys Telecommunications Laboratories, Inc., Daly City, CA 94014 (US)
(72) Inventor: Philonenko, Laurent, San Fransisco, CA 94123 (US)
(74) Representative: Dreiss, Fuhlendorf, Steimle & Becker

(57) **Abstract**

A quality of service implementation system is disclosed for client/agent communication sessions based on expectation of benefit to the session host. The system includes a control node for receiving a session request (500) and for soliciting client data associated with the request (501), a data storage system for storing client data, a processor for comparing solicited client data to stored client data (502) and for determining a quality of service option from more than one available option (503), and an option execution module for executing the selected quality of service option for application to the session (504). In a preferred embodiment, upon receiving a session request at the control node, the control node solicits data from the request and accesses the data storage system to compare the solicited data with data stored therein. A quality of service level is selected and implemented for each granted according to data comparison results.

## Description

### Field of the Invention

The present invention is in the field of Internet Communication and pertains more particularly to a method and system for determining and allocating QoS level to a customer transaction based on expected customer profit contribution.

### Cross-Reference to Related Documents

The present application is a continuation in part (CIP) a U.S. patent application S/N 09/127,284 entitled ***"Method for Predictive Routing of Incoming Calls Within a Communication Center According to History and Maximum*** ***Profit*/*Contribution Analysis*"** filed on 07/31/98, disclosure of which is included herein by reference.

### Background of the Invention

In the field of telephony communication, there have been many improvements in technology over the years that have contributed to more efficient use of telephone communication within hosted call-center environments. Most of these improvements involve integrating the telephones and switching systems in such call centers with computer hardware and software adapted for, among other things, better routing of telephone calls, faster delivery of telephone calls and associated information, and improved service with regard to client satisfaction. Such computer-enhanced telephony is known in the art as computer-telephony integration (CTI).

Generally speaking, CTI systems of various design and purpose are implemented both within individual call-centers and, in some cases, at the telephone network level. For example, processors running CTI software applications may be linked to telephone switches, service control points (SCP), and network entry points within a public or private telephone network. At the call-center level, CTI-enhanced processors, data servers, transaction servers, and the like, are linked to telephone switches and, in some cases, to similar CTI hardware at the network level, often by a dedicated digital link. CTI and other hardware within a call-center is commonly referred to as customer premises equipment (CPE). It is the CTI processor and application software is such centers that provides computer enhancement to a call center.

In a CTI-enhanced call center, telephones at agent stations are connected to a central telephony switching apparatus, such as an automatic call distributor (ACD) switch or a private branch exchange (PBX). The agent stations may also be equipped with computer terminals such as personal computers with video display unit's (PC/VDU's) so that agents manning such stations may have access to stored data as well as being linked to incoming callers by telephone equipment. Such stations may be interconnected through the PC/VDUs by a local area network (LAN). One or more data or transaction servers may also be connected to the LAN that interconnects agent stations. The LAN is, in turn, connected to the CTI processor, which is connected to the call switching apparatus of the call center.

When a call arrives at a call center, whether or not the call has been pre-processed at an SCP, typically at least the telephone number of the calling line is made available to the receiving switch at the call center by the network provider. This service is available by most networks as caller-ID information in one of several formats. If the call center is computer-enhanced (CTI) the phone number of the calling party may be used as a key to access additional information from a customer information system (CIS) database at a server on the network that connects the agent workstations. In this manner information pertinent to a call may be provided to an agent as a screen pop on the PC/VDU.

In recent years, advances in computer technology, telephony equipment, and infrastructure have provided many opportunities for improving telephone service in publicly-switched and private telephone intelligent networks. Similarly, development of a separate information and data network known as the Internet, together with advances in computer hardware and software have led to a new multimedia telephone system known in the art by several names. In this new systemology, telephone calls are simulated by multimedia computer equipment, and data, such as audio data, is transmitted over data networks as data packets. In this application the broad term used to describe such computer-simulated telephony is Data Network Telephony (DNT).

For purposes of nomenclature and definition, the inventors wish to distinguish clearly between what might be called conventional telephony, which is the telephone service enjoyed by nearly all citizens through local telephone companies and several long-distance telephone network providers, and what has been described herein as computer-simulated telephony or data-network telephony. The conventional system is familiar to nearly all, and is often referred to in the art as Connection-Orientated-Switched-Telephony (COST). The COST designation will be used extensively herein. The computer-simulated, or DNT systems are familiar to those who use and understand computer systems. Perhaps the best example of DNT is telephone service provided over the Internet, which will be referred to herein as Internet-Protocol-Network-Telephony (IPNT), by far the most extensive, but still a subset of DNT.

Both systems use signals transmitted over network links. In fact, connection to data networks for DNT such as IPNT is typically accomplished over local telephone lines, used to reach such as an Internet Service Provider (ISP). The definitive difference is that COST telephony may be considered to be connection-oriented telephony. In the COST system, calls are placed and connected by a specific dedicated path, and the connection path is maintained over the time of the call. Bandwidth is thus assured. Other calls and data do not share a connected channel path in a COST system. In a DNT system, on the other hand, the system is not dedicated or connection oriented. That is, data, including audio data, is prepared, sent, and received as data packets. The data packets share network links, and may travel by varied and variable paths. There is thus no dedicated bandwidth.

Recent improvements to available technologies associated with the transmission and reception of data packets during real-time DNT communication have enabled companies to successfully add DNT, principally IPNT, capabilities to existing CTI call centers. In typical call centers, DNT is accomplished by Internet connection and IPNT calls. For this reason, IPNT and the Internet will be used almost exclusively in examples to follow. IT should be understood, however, that this usage is exemplary, and not limiting.

In systems known to the inventors, incoming IPNT calls are processed and routed within an IPNT-capable call-center in much the same way as COST calls are routed in a CTI-enhanced center, using similar or identical routing rules, waiting queues, and so on, aside from the fact that there are two separate networks involved. Call centers having both CTI and IPNT capability utilize LAN-connected agent-stations with each station having a telephony-switch-connected headset or phone, and a PC connected, in most cases via LAN, to the network carrying the IPNT calls. Therefore, in most cases, IPNT calls are routed to the agent's PC while conventional telephony calls are routed to the agent's conventional telephone or headset. Typically separate lines and equipment must be implemented for each type of call weather COST or IPNT.

Routing of incoming telephony calls within a CTI/DNT call center, or more appropriately termed "communication center" because of inherent multimedia capability, may adhere to many different rules imposed by the company hosting the center. This is especially true for a communication center wherein both CTI and DNT capability is maintained. Routing rules then, may be quite complex. For example, statistical-based and skill-based routing conventions (known to the inventor) are now possible and are implemented in some current art communication centers. Predictive, priority, and real-time availability routing conventions (known to the inventor) may also be practiced.

More traditionally, routing within multimedia communication-centers is based upon one, several or a combination of the above-mentioned rules. The basic focus has centered around matching the right agent to the customer making the call or transaction request. For example, if the customer speaks Spanish and is interested in obtaining information about a certain type of computer, then a Spanish speaking agent specializing in that type of computer is desired to deal with the customer.

History-based predictive routing (known to the inventor) has been implemented in some communication centers with measured success. In a history-based routing system, customer information along with past history regarding purchases, credit, preferences, satisfaction level at last contact, and the like are used to predict the type of product or service for the customer and the agent that will be best able to service that customer. For example, it may be known through past purchase history that a certain customer buys a computer every two years on the average. His credit is still good with the company and he prefers a Pentium based on past purchase activity. It has been 22 months since his last purchase, and he was discontented somewhat during the last contact which was a service call shortly after that last purchase. Using this information, the system predicts that an agent specializing in servicing and selling Pentiums, with considerable conflict resolution skill would best handle that call. The customer may be queued for that agent even if an agent of different skill set is available.

The above-mentioned example reflects just one of many possible situations wherein what is already known about a customer may aid in routing his or her transaction request. Customer satisfaction is the goal in this instance with the possibility that he will buy another Pentium, of course, taken into account. This system works well in sales/service oriented situations wherein providing good service promotes future business activity. Computer sales, Appliance sales, Catalog-order sales, etc. make up this category. Service is expected from these types of companies, and is often provided equally well to frequent or high-dollar customers and to infrequent or low-dollar customers. In many cases money, which equates to profit margin, is lost because servicing a discontented customer can, depending on circumstance, cost as much or more than the amount spent by that customer patronizing the business.

Many types of organizations are much more profit-oriented than traditional sales/service organizations. Investment companies, Loan companies, Collection agencies, among others, fit into this category. It is desired by owners and administrators of such companies that a high profit margin be maintained as an utmost priority. Such bottom-line profit capability may, in many cases, determine the immediate success or failure of such a company.

A method for routing transaction requests in a hosted communication network according to a profit/contribution analysis is known to the inventor. The method includes several steps recited generally as follows:
1. Preparing a customer data repository including specific customer data and customer transaction history for each customer.
2. Receiving a new transaction request at the center.
3. Consulting the customer data repository and determining potential profitability of a new transaction based on the transaction request according to the repository information.
4. Routing the transaction request to an available resource based on the identified potential profitability of the transaction.

To accomplish the method a router accesses categorized information concerning customer demographics, transaction histories, product preferences and the like, and applies formulas developed to determine a profit potential for each incoming transaction request. In some embodiments product promotions are included in the process.

The method described above is cost conscious and helps companies reduce their costs when doing business with potentially unprofitable customers. It has occurred to the inventor that in addition to reducing costs of doing business by profiling customers and routing accordingly, further cost reduction may be afforded by regulating quality of service (QoS) of an open client DNT session by prescribing one of multiple levels of service based on expectation of profit/contribution to the communication center as a result of the transaction.

Therefore, what is clearly needed is a method by which QoS controls regulating bandwidth of a DNT connection can be adjusted dynamically in accordance with profitability or expected profitability of the customer account in general including that of the instant transaction according to expected values. A method such as this would provide further cost reduction related to costs of insuring QoS levels by enabling lower levels for transactions that are not contributive in terms of profit to a company.

Furthermore, during hold periods, QoS can be minimized or lowered irrespective of the expected profitability of the customer account in general including that of the instant transaction according to expected values.

### Summary of the Invention

In a preferred embodiment of the present invention a quality of service (QoS) implementation system for client/agent communication sessions based on expectation of benefit to the session host is provided, comprising a control node connected to the system for receiving a session request and for soliciting client data associated with a request, a data storage system for storing client data, a processor for comparing solicited client data to stored client data and for determining a quality of service option from more than one available option, and an option execution module for executing the selected quality of service option for application to the session. The system is characterized in that upon receiving a session request at the control node, the control node solicits data from the request and accesses the data storage system to compare the solicited data with data stored therein and wherein depending on the results of data comparison, a QoS level appropriate to the criteria governing the comparison is selected and executed for application to the granted session.

In a preferred embodiment the session host is an entity maintaining one or more communication centers. Also in a preferred embodiment the expectation of benefit is profit based. The control node may be an Internet protocol router, a network bridge, or a network server.

In some embodiments the data storage system is a customer resource management database maintained within the communication center subject to the requested session. In others it is a customer resource management database maintained locally at the control node. Application to the session may include propagation of replacement QoS criteria that takes priority over any existing quality of service already established in the path of communication between the client and the client's destination.

In some determination and execution of an appropriate quality of service option is automated, and in others, determination and execution of an appropriate quality of service option is manual.

In another aspect of the invention a quality of service application program for enabling application of a priority service implementation over any existing service implementation in place at network nodes occupying a session path is provided, comprising an application program interface for enabling integration with a standard quality of service software implemented at the network nodes, a data propagation module for sending and receiving the priority service implementation, and an implementation module for implementing a received quality of service package replacing any existing package implemented for the instant session.

In some cases the application program interface is self-executable. Also in some embodiments the application is installed at a control node maintained by an entity hosting one or more communication centers. The control node might be an IP router maintained within the one or more communication centers, an Internet file server, or a network bridge.

In yet another aspect of the invention method for prioritizing quality of service implementation for communication sessions within a data network, based on expected benefit of the session to the entity hosting the session is provided, comprising steps of (a) establishing more than one quality of service option for selection and implementation; (b) establishing and maintaining a customer resource management database associated with clients expected to initiate sessions; (c) receiving session requests for prioritized quality of service implementation at a control point; (d) obtaining client data from the session requests; (e) matching obtained client data to customer resource management data; and (f) determining and implementing the appropriate quality of service options for the sessions based on results of data matching.

In preferred embodiments the expected benefit is profit based. Also in some preferred embodiments the customer resource database is implemented within a communication center. In others the customer resource database is implemented at the control point. Various qualities of service options may be associated with different levels of bandwidth to be made available for applicable sessions. The control point can be a network bridge, an IP router, or a network bridge.

In preferred embodiments, in step (d) the client data comprises at least an identified phone number belonging to the client. Also in step (d) the client data may include a promotional code or password. The client data may be solicited dynamically through an automated system, which can be an interactive voice response unit, or, in some cases an electronic forms processor.

In yet another aspect of the invention a method for conserving bandwidth for DNT transactions is provided, comprising steps of (a) establishing more than one quality of service (QoS) option for selection and implementation; (b) receiving DNT transactions at a control point; (c) monitoring active or on-hold status of the DNT transactions at the control point; and (d) implementing a lower QOS option for those transactions on hold than for those active.

In these embodiments, as well as others, the control point may be within a communication center. In preferred embodiment the various quality of service options are associated with different levels of bandwidth to be made available. In various cases the control point may be a network bridge, and in other cases an IP router.

In embodiments of the invention taught below in enabling detail, for the first time a system is provided that adjusts QoS at a control point for DNT transactions automatically for different criteria, such as potential profitability or for just those transactions on hold, or for a combination of criteria.

### Brief Description of the Drawing Figures

Fig. 1 is a system diagram of a telecommunication network and multimedia communication center according to art known to the inventor but not necessarily public.

Fig. 2 is a system diagram of the telecommunication network and multimedia communication center of Fig. 1 enhanced with predictive history-based routing according to an embodiment of the present invention.

Fig. 3 is a process flowchart illustrating various process steps according to an embodiment of the present invention.

Fig. 4 is an overview of a communications network and connected center wherein QoS management is practiced according to an embodiment of the present invention.

Fig. 5 is flow chart showing systematic steps in determining QoS based on expected customer revenue according to an embodiment of the present invention.

### Description of the Preferred Embodiments

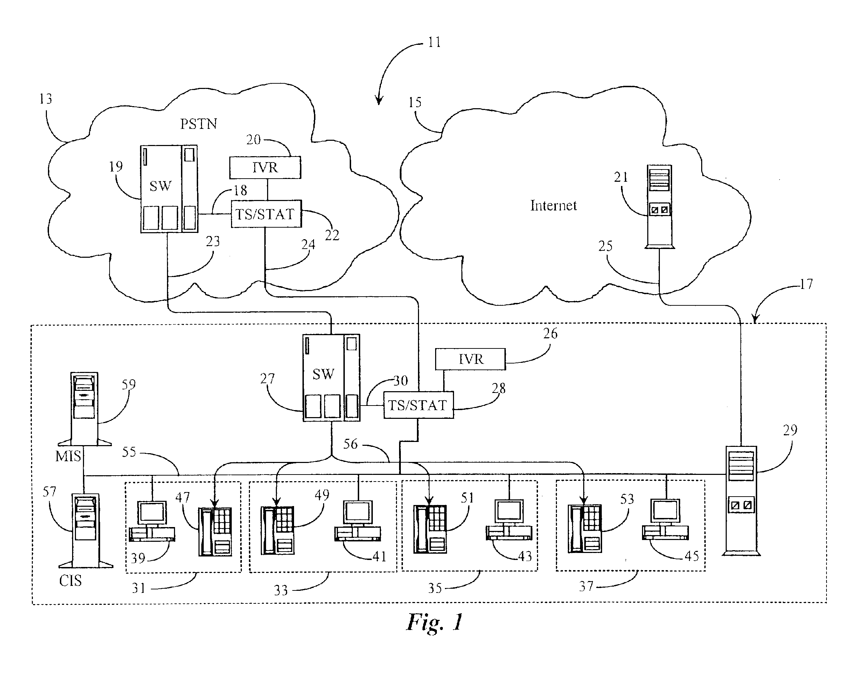

Fig. 1 is a system diagram of a telecommunication network and multimedia communication-center according to art known to the inventor, but not necessarily public, as a basis for describing the present invention.

In Fig. 1 telecommunications network 11 comprises a publicly-switched telephone network (PSTN) 13, the Internet network 15, and a multimedia communication-center 17. PSTN network 13 may be a private network rather than a public network, and Internet 15 may be another public or a private data network as are known in the art.

In this example, communication center 17 is equipped to handle both COST calls and IPNT calls which represents state of the art development for such communication centers. Both COST calls and IPNT calls are delivered to communication center 17 by separate network connections. For example, a telephony switch 19 in the PSTN may receive incoming telephone calls and rout them over a COST network connection 23 to a central switching apparatus 27 located within communication center 17. IPNT calls via Internet 15 are routed via a data router 21 over a data-network connection 25 to an IPNT router 29 within communication center 17.

In this example, an enhancement known to the inventor is provided in that network switch 19 is connected via CTI link 18 to a CTI-processor 22 running an instance of a CTI application known to the inventor as a T-server (TS) and an instance of Statistical server (STAT). An intelligent peripheral of the form of an interactive voice recognition unit (IVR) 20 is connected to processor 22 via a data link. Similar equipment is found in multimedia communication-center 17 namely, a processor 28 running instances of T-Server and STAT-server connected to central-switching apparatus 27 and further connected to a LAN 55, and an intelligent peripheral of the form of an IVR 26 which is connected to processor 28 via a data link.

Both of the above described equipment groupings are connected to each other via a separate data network 24. In this way, data about a customer may arrive at communication center 17 ahead of an actual call. This enhancement is known to the inventor and the enabled method is termed "double dipping" by the inventor. It is shown here only for the purpose of illustrating this enhancement as being available in systems as known to the inventor.

Data router 21 in cloud 15 is exemplary of routers, servers, IP switches, and other such dedicated equipment that may be assumed to be present but not specifically illustrated therein. There also may be, in network 15, processors running instances of T-servers and Stat-servers and connected to data routers, such as data router 21, and by data links to processor 28 in our exemplary telecommunication center 17, although not shown.

Call center 17 in this example comprises four agent stations 31, 33, 35, and 37 adapted to engage in multimedia interaction with customers. Each of these agent stations, such as agent station 31, for example, comprises an agent's telephone 47 for COST telephone communication and an agent's PC/VDU 39 for IPNT communication and additional data processing and viewing. Agent's telephones 49, 51, and 53 along with agent's PC/VDU 41, 43, and 45 are in similar arrangement in agent stations 33, 35, and 37 respectively. Agent's telephones, such as agent's telephone 49, are connected to COST switching apparatus 27 via telephone wiring 56.

LAN 55 connects agent's PC/VDU's to one another and to IPNT data-router 29. A client-information-system (CIS) server 57 is connected to LAN 55 and provides additional stored information about callers, usually customers of the center's host, to each LAN-connected agent. Information such as purchase history, credit information, contact information and the like is stored and retrievable. A multimedia server (MIS) 59 is connected to LAN 55 and adapted to store and serve multimedia transactions such as e-mail, video mails, IVR recordings, transferred files, etc.

Router 29 routes incoming IPNT calls to agent's PC/VDU's that are LAN connected as previously described. Data-network connection 25 connects data router 29 to data router 21 located in Internet 15. Specific Internet access and connectivity is not shown, but is well known in the art, and may be accomplished in any one of several ways. Dial-up connection and continuous LAN connection are exemplary methods.

In this example, each agent's PC/VDU, such as PC/VDU 45, has a continuous connection via LAN 55 and data network connection 25 to Internet 15 while the assigned agent is logged on to the system, however, this is not specifically required but rather preferred, so that incoming IPNT calls may be routed efficiently

In examples provides herein, an object of the description is to show a new and innovative method of routing transaction requests to resources. Agents at agent stations are good examples, but not limiting examples, of resources to which transaction requests, such as incoming calls, may be routed. It will be apparent to the skilled artisan, however, that there may be other resources to which a transaction request may be routed. As an extreme example, the system may decide by the methods of the invention, that in incoming call should go directly to an officer of the company that hosts the call center, who is on vacation, and an outbound call will be made to the officer at an alternate number available. In other instances, there may be facility at the call center to host home agents, and to provide such agents with all of the services of the call center. Although these home agent facilities are not shown in the drawings, the inventor intends that such are to be included in the methods of the invention. The system of the invention routes transaction requests to whatever resources are available and configured into the system.

Returning now to Fig. 1, an agent operating at an agent station such as agent station 33 may have COST calls arriving on agent's telephone 49 while IPNT calls are arriving on agent's PC/VDU 41.

Routing of COST events within center 17 is performed via routines associated with the T-Server running on processor 28. Routing of DNT events including IPNT calls is performed via IPNT router 29. In some embodiments, DNT routing may also be affected via processor 28 by virtue of it's T-Server capability and LAN connection.

It will be apparent to one with skill in the art that various routing protocols may be practiced within this system both at the network level and within center 17, and that predictive routing based on customer history may be practiced with system access of CIS 57 which contains information regarding the customer as previously described. However, current art regimens are somewhat limited in scope regarding updating, reporting, and access of data including cross-referencing, analyzing and so on.

While predictive routing based on history has merits within certain situations, it is desired in many instances to provide a more direct and complete analysis of a potential transaction's fiscal impact on a company whether positive or negative. This is especially true within certain profit-driven organizations as was mentioned in the background section. Therefore, it is an object of the present invention to provide a system of data storage and an intelligent routing routine, not previously available to the public, that can effectively prioritize and route calls based on an analysis of the margin of profit contribution to the company expec6ed from a potential transaction, on a transaction-by-transaction basis.

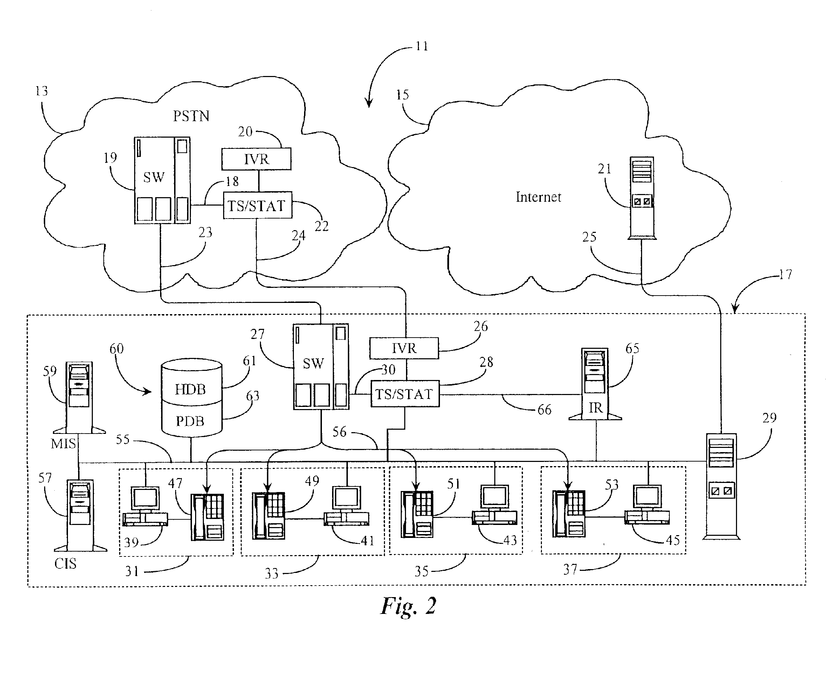

Fig. 2 is a system diagram of the telecommunication network and multimedia communication center of Fig. 1 enhanced with predictive potential-profit-based routing according to an embodiment of the present invention. In an effort to avoid redundancy, elements introduced and described with reference to Fig. 1 that are also present in Fig. 2 are not re-introduced unless they have been altered according to an embodiment of the present invention.

One basic enhancement to communication center 17 as known to the inventor involves connecting agent telephones 47-53 to their associated PC/VDU's 39-45 at agent stations 31-37 respectively, and as illustrated with the addition of connecting lines at each station. This method employs use of I/O cables to facilitate a connection from a telephone transceiver/receiver to the sound card on a computer. In this way a single headset or handset telephone may be used to receive both COST calls from PSTN 13 or IPNT calls from Internet 15. While this architecture is not required to practice the present invention, such connections aid in functional performance and call-monitoring ability within communication center 17 and may, in some instances, aid the function of the present invention.

According to a preferred embodiment of the present invention, a mass-storage repository 60 comprising a historical database (HDB) 61 and a product database (PDB) 63 is provided and connected to LAN 55. HDB 61 contains complete historical records of client status and transaction activity regarding interaction with communication center 17 such as purchase history including dollar amounts for each transaction, type of product or service purchased, date of purchase, quantity parameters, order numbers, etc. The specific character of the stored data may vary widely. It may also reside in other facilities, and be remotely accessed, by a multitenant call-center, having such a DB connection for each of the tenants sharing use of the call center. It is clear that there are many setups and configurations that can be used to achieve the same in this or other environment, but they all essentially allow access to a data base, so for simplicity purposes only one DB is shown.

Status records indicate, among other things, financial status, demographic category, family status including listings of relatives, employment record, net-worth information, and any other parameters that may be legally obtained and documented. Such information is recorded and updated over time during normal transaction occurrences between center 17 and the client. Other facts about clients may be solicited through IVR, questionnaire, purchased information from other sources, and so on.

PDB 63 contains product information such as description, pricing, promotional information, order numbers, etc. PDB 63, in this example, resides at the same location (machine 60) as HDB 61 however, a number of other possibilities exist without departing from the spirit and scope of the present invention. For example, each database may be implemented in separate LAN-connected machines within communication center 17.

In one embodiment, such data resources may be stored outside of communication center 17 such as at a central location connected via private wide area network (WAN) to, and shared by, a plurality of geographically distributed communication-centers. In an alternate embodiment, such resources may be securely hosted in public domain within network 15, which in this example, is the Internet. Data access to repository 60 may be provided via LAN 55, as taught herein, or via a WAN as explained above. There are many variant possibilities.

Information-storage rules dictate how client and product related data are stored and accessed. These rules will vary somewhat depending upon the type of enterprise (company hosting the communication center) and location of repository 60 (centralized and shared on WAN; or local on LAN). For example, clients or customers may be categorized according to demographic rules with their parameters and other known information stored in segmented fashion reflecting a particular demographic segment with higher call priority associated with one or more segments.

Accessing certain customer data from HDB 61 may be generally prohibited except via automated routine during routing of calls. In this way, certain privacy or legal aspects may be protected if applicable. Security methods such as encoding, password protection, encryption, use of firewall, and the like may be used to protect information from unauthorized agents (in case of manual access) and or the general public (if repository 60 is WAN-based). Such data protection methods are well known in the art and available to the inventor.

In a preferred embodiment, access to HDB 61 and PDB 63 occurs during automated routing of incoming calls from clients as part of a definitive and innovative process for determining the priority of, and best fit resource destination for, each incoming call based on a system analysis of real and potential profit contribution available to the company from each individual client transaction, in particular a transaction reasonably predictable from a client transaction request and access to the databases and other information with unique code routines according to embodiments of the present invention.

An intelligent router (IR) 65 is provided for the purpose of routing calls from both the COST network 13 and Internet 15 according to predictive history-based and demographics-based profit rules as briefly described above. IR 65 is connected to LAN 55 and also linked to processor 28 via data link 66. Data link 66 is not specifically required here as both IR 65 and processor 28 are LAN connected. However, performance enhancement is often achieved through direct data-linking techniques as is known in the art.

IR 65, by virtue of the innovative predictive-routing method of the present invention, is adapted to access repository 60, obtain relevant information from HDB 61 and PDB 63 that has been prepared and organized in many instances via data mining, and analyze the information in order to determine a resource destination, and in some cases a priority for each call, and then route the call based upon that determination.

In addition to the ability to search and retrieve relevant data from repository 60, IR 65 may also utilize IVR and CIS information to aid in effecting the goal as taught by the present invention. For example, if a client is new, and no current information is available about him or her in repository 60, then a new history may begin with IVR interaction at first contact such as from IVR 20 and, perhaps, from basic information which may be stored in CIS 57 which may contain, but is not limited to, contact information about potential customers or clients that have not yet patronized the company. Thus, after identifying a client, IVR 20 may obtain initial information from the caller for use in searching CIS 57 for additional information which may then be entered into HDB 61.

In addition to historical data, product data, client status, and the like, there are in some cases real time considerations to be made in determining potential profitability. For example, depending on the nature of the enterprise hosting a call center and the products and/or services offered, the IR may access periodically or continually updated records of information such as lending rates (interest rates), stock quotations, load conditions in a network, and so on, as input in various formulas and algorithms developed for determining potential profit. It should also be clear that cost issues also effect profitability and will be taken into account in many algorithms for determining potential profitability. The present invention is in the nature of the determination rather than in the specific details of how profitability might be determined. That is, it will be clear to the skilled artisan that there are a wide variety of specific algorithms that might be developed within the spirit and scope of the present invention in order to determine potential profitability, depending on such issues as the nature of products and services, the nature of the enterprise, and many other factors.

Once a call is received at central switch 27, IVR 26 may solicit further, more detailed information from the caller, perhaps taking financial information, product interests, or other qualifying demographic information which may be entered into HDB 61. IR 65 may route the call to an agent if enough data can be compiled to formulate a profit-contribution prediction.

If not enough information is known about a client, IR 65 may route the caller to an automated attendant such as an automated fax or alternative IVR attendant. Perhaps a lower priority routing to an information agent may be the determination. Any interaction results are subsequently added to HDB 61 as part of the contact history of that client. In any event, a complete transaction history including any agent/client interaction result is developed, stored and maintained in HDB 61 as the client continues to do business with the company. Interactions, as defined herein, include all multimedia transactions in addition to COST and IPNT calls that may be supported by the system including but not limited to e-mail, video mail, faxes, voice mail, WEB-initiated transaction requests, and so on.

In one embodiment, client data stored in HDB 61 is cross-referenced to product information stored in PDB 63 in order to, for example, match a relevant product promotion to a client based on purchase history. Upon selecting the correct product promotion, product scripting may be provided to an agent ahead of or with the call for use in guiding the client toward placing an order.

It will be apparent to one with skill in the art that as a client develops an interaction history with the company, an average profit contribution from the client to the company per transaction may be easily calculated on an ongoing basis from known cost values such as cost of agent time, service costs, product material costs, and so on. The results of such calculation may, of course, change over time as new variables are added and old variables are discarded. For example, a new income bracket for a client may be a new variable where as the old income information would be purged from HDB 61, and so on. Other methods may also be used rather than just average. For example based on the last transaction being ATM card "eaten" by ATM machine, it is quite reasonable to assume the following transaction is a complaint about that rather than new business, and hence the call may be bumped off to an IVR or a low priority queue. So from this example, it is clear that event sequences can be used to determine the "net value" of the next transaction. Other factors could be time of day (at customer and/or business location, his current location vs. his "normal location", time of month, time of year, whether at his present location etc.

It will also be apparent to one with skill in the art that the software containing the routine of the present invention may reside in processor 28, IR 65, repository 60, or a combination thereof. Instances of such a routine may also reside at individual agent PC/VDU's such as PC/VDU 39.

It will likewise be apparent to one with skill in the art that underlying rules for determining real and potential profit contribution from a client may vary considerably with call priority determination based on a relatively few or a large number of stored variables. A more detailed example of possible steps performed by the software of the present invention in determining profit contribution and best-fit destination is provided below.

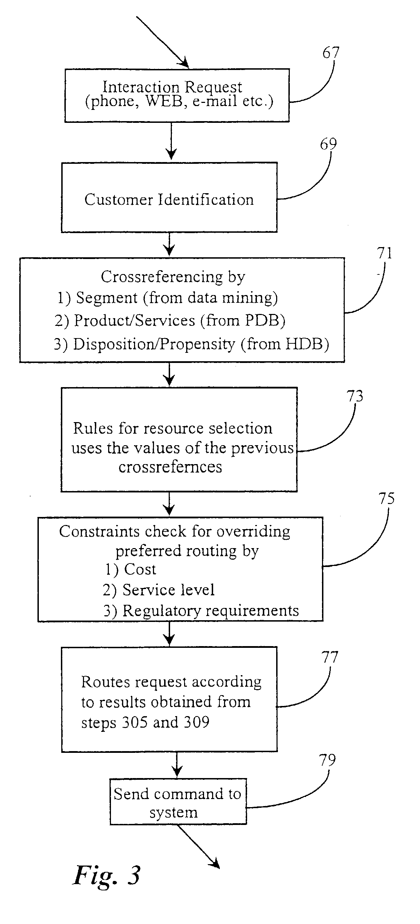

Fig. 3 is a process flowchart illustrating various process steps according to an embodiment of the present invention. The basic steps in determining potential profit contribution, assigning priority and routing an incoming transaction request according to an embodiment of the present invention may vary considerably depending on, among other factors, type of enterprise, products or services offered, number of variables considered, and so on. Fig. 3 is intended to reflect just one example of a possible process sequence.

In step 67, an interaction request is registered at either switch 27 or IPNT router 29 of Fig. 2. An interaction request is defined as being of the form of any supported media such as e-mail, COST call, IPNT call, WEB request, video mail, etc. In step 69, the customer is identified through any one or by a combination of known methods such as caller line identity, domain-name ID, return e-mail address, IP address, and so on. In step 71, data regarding the customer is accessed from HDB 61. IVR 26 and CIS 57 may also contribute to the data pool.

Certain variables such as demographic category, from such info as last credit report, average profit contribution and so on is performed along with cross-referencing to PDB 63 for appropriate product/service information including information on current product promotions, quantity discounts, current interest structure for finance, and so on. Customer disposition at last contact along with propensity toward a purchase decision as averaged over past transaction history may also be obtained from HDB 61.

The retrieved data and cross referencing performed in step 71 will produce the integral variables usable by the routing routine to determine a priority and a resource destination for the transaction request in terms of probable profit contribution, and to make an appropriate resource selection in step 73. A bottom-line predicted profit contribution for the existing transaction is calculated from analyzing of the data. In step 74, a constraint check is performed to validate the interaction and associated data against any preset override conditions set up by the enterprise, such as legal requirements, service level, or cost restraints as well as customer rating which may alter or override prior routing strategy.

In step 77, the routing routine routes the interaction request according to results obtained in steps 71, 73, and 75. If it was calculated that a high profit contribution is probable, then priority for the interaction is high and the interaction is handled accordingly. If however, it is determined that the probable profit contribution is low, non-existent, or even a drain on the company, a lower priority disposition of the caller is warranted. In step 79, the actual command to route the interaction to a selected destination is given to the appropriate delivery system apparatus such as IPNT router 29, switch 27, MIS 59, etc.

In one embodiment wherein a repository such as repository 60 is shared by a plurality of communication centers, existing routines using the same information may vary in process and priority determination methods according to local rules set up at each separate communication center.

Regular updating to repository 60 may be performed via a variety of ways without departing from the spirit and scope of the present invention. For example, manual updating may be part of the duties of a system administrator. Results from mailed questionnaires, automated customer surveys, communication center transactions, purchased information from other sources, credit reporting agencies, demographic studies, and so on, may be entered to and made part of HDB 61. Continual updating and purging of non-valid information is pertinent to maintaining system integrity.

### Dynamic Allocation of QoS for Client/Center Sessions

In another aspect of the present invention, a method for regulating levels of QoS guaranteed for client/center transactions based on profit/contribution expectations of the center is provided. The method and apparatus of the invention is disclosed in enabling detail below.

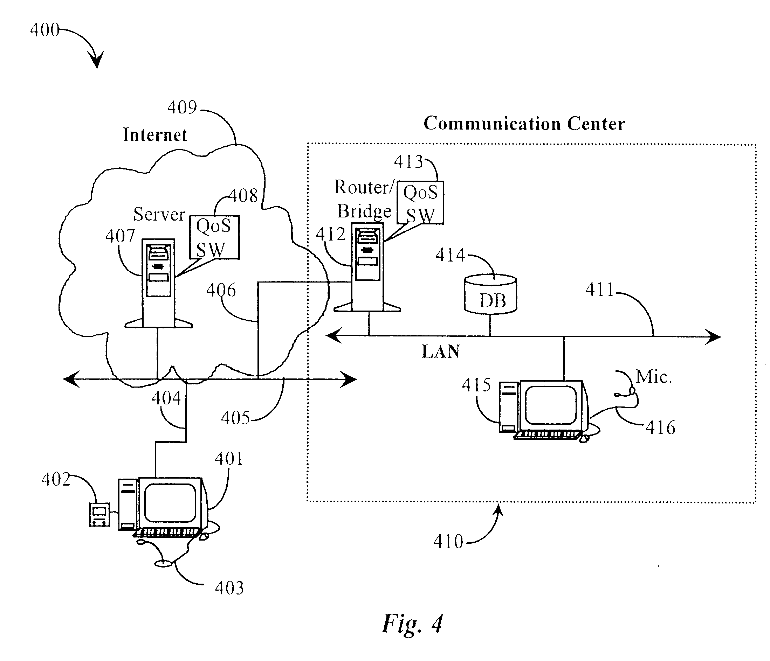

Fig. 4 is an overview of a communications network 400 and connected center 410 wherein QoS management is practiced according to an embodiment of the present invention. Communications network 400 comprises the well-known Internet network represented herein by a network cloud 409, an exemplary communication center illustrated as enclosed in a dotted rectangle given the element number 410, and an exemplary customer of center 410 illustrated herein as a PC icon given the element number 401.

Customer 401 is illustrated in this embodiment as in communication with center 410 through network 409. It will be appreciated that customer 401 (PC icon) is engaged in DNT communication according to one of several well-known Internet-connection methods. Actual connection to network 409 is typically made through the well-known public-switched-telephony-network (PSTN) using an Internet-service-provider (ISP), neither of which is illustrated but assumed to be present in this example.

Internet 409 may instead be a wide-area network of private or corporate nature instead of the public Internet network, however the inventor chooses the Internet in a preferred embodiment because of its public accessibility. Customer 401 utilizes a connected microphone 403 in communication, typically IP telephony and may also utilize connected peripherals such as an illustrated personal digital assistant (PDA) given the element number 402. Customer 401 may be represented by other communication equipment rather than a PC, for example, an Internet-capable telephone or any other Internet-capable communication device or system. Representation of a PC in this embodiment should not be construed as a limitation.

Internet 409 has an Internet backbone 405 illustrated therein and intended by the inventor to represent all of the connection lines, equipment and access points that make up the Internet as a whole. Therefore, there are no geographic limits to the practice of the invention. Customer 401 accesses Internet network 409, more specifically backbone 405 by an Internet access line 404. Access line 404 can be a telephone line, a fiber optics cable, a digital link or any other link capable of Internet access including a wireless link.

An Internet file server 407 is illustrated within Internet 409 and connected to backbone 405. Server 407 is adapted to serve electronic information pages commonly known as Web pages, as well as providing a direct communication access point (CAP) between customers such as customer 401 and communication center 410. A real time communication link or links (not shown) representing varied media technologies facilitating customer access to center 410 may be assumed to be embedded in one or more Web pages served by server 407 and accessible to customer 401. Such links may be IP telephony links, file sharing links, e-mail links, URL links, IP chat links, or any other facilities enabling communications between customer 401 and center 410. For example, an IPNT icon embedded in a Web page served by server 407 is typical upon which when invoked by customer 401 opens an IP communications channel to a central receiving point within center 410 prior to routing or, in some cases directly to an agent working within center 410.

Communication center 410 is, in a preferred embodiment, a DNT-capable communication center meaning that calls arriving thereto from both a COST network or a data packet network (DPN) are routed as DNT events to appropriate agents or automated systems within the center. Complex routing routines including predictive call routing may be assumed to be operative within and controlled from center 410. In another embodiment there may be COST equipment (not shown) present and operative within center 410 for the purpose of receiving and handling COST events sourced from a COST network. In a DNT/COST capable situation, a CTI-enhanced central telephony switch (PBX or other), interactive voice response (IVR) and standard telephone wiring would be present.

In this example, an IP router 412 is illustrated within center 410 and functions as a central switch for routing IP events within center 410. In this case any COST events destined for center 410 are converted to DNT protocol before routing. In one embodiment, the bridging function may be included within IP router 412 as is denoted by the term Bridge included in the labeling applied to router 412. Router 412 is illustrated as having a persistent connection (24/7) to Internet backbone 405 via a digital network link 406. Router 412 is in this embodiment hosted by the entity hosting center 410, however it is not required in order to practice the invention. Router 412 may be hosted by a third party and maintained externally from center 410 in terms of physical domain. It will be appreciated as well that there may be more than one router existing within center 410 and/or within network 409 that is adapted to practice the present invention.

Communication center 410 has a local area network (LAN) 411 provided therein and adapted for network communication according, in this case, to Internet protocols. Router 412 is directly connected to LAN 411 by network link. A communication center workstation, illustrated herein by a PC icon given the element number 415 is shown connected to LAN 411 by a network link and therefore has direct access to router 412. Station 415 represents an exemplary agent workstation for receiving and treating customer transactions and live sessions according to center protocols. It will be appreciated that there will likely be many more LAN connected agent stations within an actual center than is illustrated herein. The inventor deems that one such station illustrated is sufficient for explanatory purpose. Agent station 415 has a microphone 416 ported thereto and adapted for IP telephony.

A database (DB) 414 is illustrated within center 410 and is connected to LAN 411. Database 414 is typically a mass storage repository enhanced with database software. DB 414 can be an optical storage system or any other known storage facility that is routinely accessed for information to aid center business. Customer information, such as identity, purchase history, demographic status, location information, preference information, and so on may be stored in and accessible from DB 414. Also, product information, promotional information, agent status information, pricing information, communication center statistical information, call history information and so on may also be present in and accessible from DB 414. It will be appreciated that there may be more than one DB connected to LAN 411 and adapted to serve information according to the type stored therein upon access from a live agent or from any automated systems (not shown) that may be operational within center 410. For example, a customer information system (CIS), an agent information system (AIS), and a product information system (PIS) may be implemented on separate DB machines as long as they are accessible via LAN 411. There are many architectural possibilities. The inventor deems that the illustration therefore of a single database is sufficient for explanatory purpose.

In this representation, customer 401 is presumed to be in session with agent station 415 as facilitated by customer interaction with server 407 and event routing by router 412. In normal servicing of customer 401, an agent operating station 415 has access to all data required to successfully treat the customer. Typically, customer 401 enjoys a certain QoS regimen that provides a reasonable quality of service for maintaining the session engaged such that communication quality is satisfactory.

In prior art, QoS must be implemented such that each individual data stream is assured a certain amount of bandwidth if service is to be "guaranteed". Because bandwidth is shared in DNT applications, QoS manages which applications will get more bandwidth based on the applications requirements. QoS must be enabled from source to end in order to work and it must be a part of all network layers.

Resource Reservation Protocol (RSVP) is one of 2 common QoS implementations. In RSVP, applications are apportioned network resources according to QoS request and are subject to bandwidth management policy.

Prioritization, sometimes termed "differentiated services" is another QoS protocol. In prioritization, network traffic is classified and apportioned network resources according to bandwidth management policy criteria. To enable QoS, classifications give preferential treatment to applications identified as having more demanding requirements. These QoS protocols and algorithms are not competitive or mutually exclusive, but on the contrary, they are complementary. As a result, they are designed for use in combination to accommodate the varying operational requirements in different network contexts.

In prior-art centers, QoS is controlled by a third party and offered as a service that is paid for by business entities that are accessible from the network such as communication center 410. Under a *prior-art* service routine every person that accesses center 410 has QoS assurance essentially prioritized by application demands and QoS request parameters. This means that a certain level of bandwidth is apportioned for communication quality for each data stream according to an established service class, whether just audio or both audio and video. Clients accessing the center with certain application types will automatically get preferential treatment (more bandwidth) than clients using certain other application types whether the session will be profitable to center 410 or not.

It is a goal of the present invention to enable parameterization of QoS such that dynamic change in service for a particular data stream can be controlled by the destination of the caller, in this case, communication center 410. In a preferred embodiment, the control parameters are centered around profit for communication center 410. In other embodiments, other benefit criteria could be applied instead of a strict profit contribution analysis. For example, during hold periods, QOS may be reduced generally, without regard for profitability of a customer account in general including that of the instant transaction according to expected values.

Ability to control QoS bandwidth allocation in the network depends on customer management resource (CRM) criteria that can be accessed from, in this case, DB 414 while a caller is waiting to be routed to an agent in center 410. Server 407 within network 409 has an instance of QoS 408 operating thereon according to one embodiment of the invention. Router 413 within communication center 410 has an instance of QoS software 413 operating thereon according to one embodiment of the present invention. Instance 413 communicates with instance 408 and any other appropriate QoS instance installed on other nodes in any given communication path. It is important to note herein that Server 407 may also be an IP router connected to a contact server. A goal is to implement dynamic QoS parameters and therefore dynamic service classes into the level of network control such that QoS is regulated for those identified customers of center 410.

Software instance 408 on server 407 is a standard QoS protocol that services QoS requests according to standard network criteria with the exception that for customers identified as clients of center 410, the class segmentation is based on profit parameters rather than application requirements. Therefore, modification to a standard QoS package is very minor and can be implemented in any network nodes already running QoS software without manual installation. A service defined by the additional feature is marketable to communications centers and other appropriate businesses that cater to large customer bases.

QoS instance 413 on router 412 can be a standard instance with the additional feature as described above with reference to instance 408. In another embodiment, instance 413 can be a special client QoS application that has the capability of being configured for a priority service allocation scheme and then to pass that same scheme on to other QoS instances throughout network 409. Identification of clients of center 410 can be made within network 409 or within communication center 410 after a call arrives.

In this example, a user operating station 401 accesses server 407 by way of link 404 and backbone 405. In one embodiment wherein server 407 is owned exclusively by the entity hosting center 410, CRM information can be made available locally for customer identification upon server access. In another embodiment the CRM parameters can be passed to server 407 from router 412 after consultation with DB 414. These embodiments assume of course that prior data is available for the customer operating station 401. If the customer is new to center 410 (first time caller) then CRM profiling can be initiated through automated form filling, IVR, or other real-time information solicitation mechanisms.

Take for example, a voice over IP (VoIP) call wherein customer 401 is engaged in a VoIP call to center 410. During normal network load conditions including call volume at center 410, normal VoIP criteria may apply. Therefore, the customer is allocated the appropriate bandwidth for the call based simply on application request. However, if conditions at center 410 become overloaded or busy above a certain pre-set threshold, QoS instance 413 would pass a replacement criterion (priority scheme) for QoS application along the entire communication path.

If the customer has a very good purchase history and a profit/contribution level is high, then customer 401 would receive as much bandwidth as is available under current conditions. It may be that other customers who are not profitable and who are making VoIP calls to center 410 may receive as little bandwidth as possible, for example, just enough to maintain a working connection. In some cases, those customers are dropped altogether because there are currently high profit clients in communication with center 410 and are using all the available bandwidth.

CRM segmentation may be rather simple such as all gold customers are to receive better QoS that all silver customers who receive less bandwidth. If there is a class for bronze customers it would receive the lowest priority regardless of application type. In a broad classification scenario, a customer is simply classified into one of the classes based on profile. An instant call from the particular customer may or may not be a profit call. However, because of his or her "gold" record, optimum QoS is virtually guaranteed even under low bandwidth conditions.

In one embodiment of the present invention, classification is dynamic and made at the actual time of connection. For example, customer 401 initiates an IP telephony call to center 410 from server 407. Normal QoS rules apply and customer 401 makes a connection to router 412 with bandwidth allocated according to request and application type. At this point, router 412 accesses DB 414 for a CRM profile and also interact with the customer using a DNT version of an IVR. Selection of options offered by the IVR interaction indicates a new service class of QoS based on profitability potential of the instant session with CRM data taken into account. If the customer selects "purchase" then the Gold class parameters override the normal QoS criteria. If the customer selects "complaint", then the Bronze class parameters are initiated. It is important to note herein that the class override will occur at every QoS enabled node in the communication path through the network.

In still another embodiment of dynamic control, assume that there are contact icons associated with differing service class levels embedded in a Web page for contact to center 410 and accessed by customer 401. In this case, activation of one of those icons launches the appropriate service parameters, which override those already in place up line. It is not required that the present invention be practiced only in case of adverse network and/or center traffic conditions. Some business applications may lend to QoS profit-based services for all contacts. One example might be a collection agency where they are only interested in call backs that are willing to settle and not those who wish to argue or contest.

The method of the invention applies to all DNT type communication events that may use standard QoS protocols when being routed through a network. Even a COST telephony QoS level can be applied according to the embodiments described above in portions of the communications network where DNT links are used. A case in point would be a COST caller connecting to a computer through a network bridge.

Methods for dynamic interception of profit/contribution data from an incoming event for use in regulating QoS for a particular session can be developed from known technologies for any type of media application. For example, IVR technology (COST or DNT), electronic forms, contact icon segmentation at Web level, parsing engines for text portions of events, and so on represent some possibilities. Longtime repeat customers may have a persistent CRM profile wherein even if they call to complain or argue for money owed them, they may receive high priority if they are, according to CRM, particularly profitable to the center on the average.

In a preferred embodiment the prioritized QoS scheme is implemented from end to end during a client/center session. In addition to IVR solicitation, form solicitation and other forms of data retrieval from a client, traditional methods used in telephony routing such as automated number identification service (ANIS) and destination number identification service (DNIS) may be used as the only identification for a particular QoS package. As was previously described, priority QoS for a session is implemented from a point of control and is propagated end to end in a preferred embodiment.

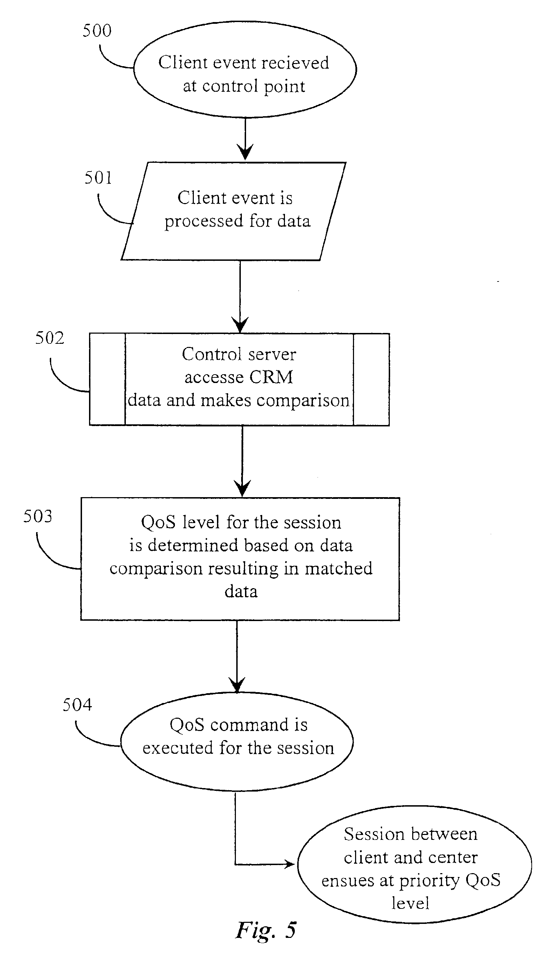

Fig. 5 is flow chart showing systematic steps in determining a QoS level for a session based on expected customer revenue according to an embodiment of the present invention. At step 500, a client request is received at a point of control that can be within the destination center, or any control point within the service network as long as CRM data can be accessed from the point in the network. In one embodiment, the point of control is an IP router within the communication center that the client is trying to reach. In another embodiment, the point of control is an IP router or server maintained at network level and accessible to the requesting client. In still another embodiment, the point of control is a network bridge implemented within the center or within the network and accessible to the center.

At step 501, a server associated with the point of control processes the client request for information to match with CRM data. Depending on media type of the event and enterprise rules, several different methods and criteria may apply. For example, if the session is a voice call bridged into a DNT network from a COST network, traditional telephony ID information may be all that is required to apply a priority QoS status for the session.

At step 502, the server at the point of control calls a database containing CRM data and compares the information taken from the request with information contained therein. In one embodiment, the database is located within the center that the client is calling. In another embodiment, all or portions of the database may be held locally at the control point. If information taken from the client matches information in the database, then a QoS priority level is determined for the session in step 503 and returned to the server. Service levels may be predetermined for all clients having information in the database such that simple identification of the client is all that is required to invoke a QoS priority.

In a preferred embodiment, QoS levels are based on expected profit contribution from the client either in general or in some embodiments, for the instant session. If a client has no match in the database then a CRM profile may be established at the time of the call. If there is any data taken from the client request data such as an indication of immediate product purchase or the like, then a high QoS priority may be given to the session.

At step 504, the QoS priority command is propagated from the control point up-line along the client's path of communication and is executed at all intermediary control nodes such as network routers and the like that are QoS enabled. In some cases, if current QoS for the session is sufficiently at the level or above a proposed QoS level resulting from client identification, then it may not be necessary to implement the priority package. It is noted herein that in a case where the client has enjoyed high bandwidth over a connection, and then has been identified as an unprofitable client, a lower bandwidth reservation would result from priority QoS execution.

At step 505, the session between the client and an agent or system within the center ensues at the allocated level of bandwidth according to priority QoS execution from the control point. In certain overload conditions, bandwidth may be sufficiently denied to unprofitable sessions such that they may fade out and ultimately be dropped or disconnected while profitable sessions remain connected at high QoS levels.

In one embodiment, the establishment of a priority QoS routine for a session is dynamically controllable during the session both in an automated sense and manually by a connected agent. In the first case scenario, periodic sampling of session content may indicate that the session has gone on for an unacceptable period of time wherein no purchase has been made. At that point, a lower QoS level may be applied to the session. In another embodiment, an agent from his or her desktop may also control priority QoS implementation. In the case of desktop control, an agent may have icons representing various QoS service levels present such that if he or she feels that no progress toward a profit realization from the session can be had, then he or she may lower the QoS level by clicking on the appropriate icon thereby executing the lower level.

It is noted herein that in all embodiments it is preferred that the priority QoS assignment whether executed from within the center or at the level of the network be implemented at all participating nodes in the path of communication.

There are many possible embodiments to which the method and apparatus of the present invention may be practiced several of which have already been taught. The spirit and scope of the present invention is limited only by the claims that follow.

## Claims

1. A quality of service (QoS) implementation system for client/agent communication sessions based on expectation of benefit to the session host comprising:
a control node connected to the system for receiving a session request and for soliciting client data associated with a request;
a data storage system for storing client data;
a processor for comparing solicited client data to stored client data and for determining a quality of service option from more than one available option; and
an option execution module for executing the selected quality of service option for application to the session;
**characterized in that** upon receiving a session request at the control node, the control node solicits data from the request and accesses the data storage system to compare the solicited data with data stored therein and wherein depending on the results of data comparison, a QoS level appropriate to the criteria governing the comparison is selected and executed for application to the granted session.

2. The system of claim 1 wherein the session host is an entity maintaining one or more communication centers.

3. The system of claim 1 wherein the expectation of benefit is profit based.

4. The system of claim 1 wherein the control node is an Internet protocol router.

5. The system of claim 1 wherein the control node is a network bridge.

6. The system of claim 1 wherein the control node is a network server.

7. The system of claim 1 wherein the data storage system is a customer resource management database maintained within the communication center subject to the requested session.

8. The system of claim 1 wherein the data storage system is a customer resource management database maintained locally at the control node.

9. The system of claim 1 wherein application to the session includes propagation of replacement quality of service criteria that takes priority over any existing quality of service already established in the path of communication between the client and the client's destination.

10. The system of claim 1 wherein determination and execution of an appropriate quality of service option is automated.

11. The system of claim 1 wherein determination and execution of an appropriate quality of service option is manual.

12. A quality of service application program for enabling application of a priority service implementation over any existing service implementation in place at network nodes occupying a session path comprising:
an application program interface for enabling integration with a standard quality of service software implemented at the network nodes;
a data propagation module for sending and receiving the priority service implementation; and
implementation module for implementing a received quality of service package replacing any existing package implemented for the instant session.

13. The application program of claim 12 wherein the application program interface is self-executable.

14. The application program of claim 12 wherein the application is installed at a control node maintained by an entity hosting one or more communication centers.

15. The application program of claim 14 wherein the control node is an IP router maintained within the one or more communication centers.

16. The application program of claim 14 wherein the control node is an Internet file server.

17. The application program of claim 14 wherein the control node is a network bridge.

18. A method for prioritizing quality of service implementation for communication sessions within a data network based on expected benefit of the session to the entity hosting the session comprising steps of:
(a) establishing more than one quality of service option for selection and implementation;
(b) establishing and maintaining a customer resource management database associated with clients expected to initiate sessions;
(c) receiving session requests for prioritized quality of service implementation at a control point;
(d) obtaining client data from the session requests;
(e) matching obtained client data to customer resource management data; and
(f) determining and implementing the appropriate quality of service options for the sessions based on results of data matching.

19. The method of claim 18 wherein the expected benefit is profit based.

20. The method of claim 18 wherein in step (b) the customer resource database is implemented within a communication center.

21. The method of claim 18 wherein in step (b) the customer resource database is implemented at the control point.

22. The method of claim 18 wherein in step (a) the various quality of service options are associated with different levels of bandwidth to be made available for applicable sessions.

23. The method of claim 18 wherein in step (c) the control point is a network bridge.

24. The method of claim 18 wherein in step (c) the control point is an IP router.

25. Method of claim 18 wherein in step (d) the client data comprises at least identified phone number belonging to the client.

26. The method of claim 18 wherein in step (d) the client data includes a promotional code or password.

27. The method of claim 18 wherein in step (d) the client data solicited dynamically through an automated system.

28. The method of claim 27 wherein automated system is an interactive voice response unit.

29. The method of claim 27 wherein the automated system is electronic forms processor.

30. A method for conserving bandwidth for DNT transactions, comprising steps of:
(a) establishing more than one quality of service (QoS) option for selection and implementation;
(b) receiving DNT transactions at a control point;
(c) monitoring active or on-hold status of the DNT transactions at the control point; and
(d) implementing a lower QOS option for those transactions on hold than for those active.

31. The method of claim 30 wherein in step (b) the control point is within a communication center.

32. The method of claim 30 wherein in step (a) the various qualities of service options are associated with different levels of bandwidth to be made available.

33. The method of claim 30 wherein in step (b) the control point is a network bridge.

34. The method of claim 30 wherein in step (b) the control point is an IP router.
